# EUROPEAN PATENT SPECIFICATION

(11) **EP 2 208 694 B1**
(45) Date of publication and mention of the grant of the patent: **14.03.2012**
(21) Application number: 09150766.5
(22) Date of filing: 16.01.2009
(51) Int. Cl.: B65G 47/54

(54) **An apparatus for transferring a container**
Vorrichtung zum Umsetzen eines Behälters
Dispositif pour le transfert d'un container

(43) Date of publication of application: 21.07.2010
(73) Proprietor: Ingenieursbureau Moderniek B.V., 3762 EV Soest (NL)
(72) Inventor: Nijmeijer, Johannes Jan, 3762 VC Soest (NL)
(74) Representative: Hesselink, Dinah Elisabeth

(56) References cited:
- EP-A- 0 477 104
- EP-A- 1 829 803
- DE-A1- 3 504 365
- GB-A- 1 188 671
- JP-A- 4 286 528
- JP-A- 6 115 684
- JP-A- 8 319 004
- JP-U- 60 157 719
- US-A- 5 050 857

## Description

The invention relates to an apparatus for transferring a container from a vehicle to a conveyor or from a conveyor to a vehicle.

For luggage transport from airplanes to a luggage depot, containers which contain luggage pieces are transported by so-called dollys. In practice each dolly supports a container. Such a dolly is often provided with a bottom including a movable bottom surface which can be locked. The movable bottom surface of a dolly may be formed by freely rotatable rollers for easy displacement of the container in one direction, or balls for easy displacement in different directions. During transport of the dolly the bottom surface is locked such that the container has a fixed position with respect to the dolly. When the container has to be removed from the dolly the bottom surface is unlocked such that the container can be easily displaced with respect to the dolly. For example, an operator can push the container from the dolly to a conveyor. The conveyor transports the container further, for example to a location where the content of the container can be unloaded.

JP 04 286528 is related to an article transferring device according to the preamble of claim 1 including a roller conveyer having a carrying face corresponding to the plane shape of an article to be carried and a pair of endless carrying devices which are positioned between the rollers of the roller conveyer and can freely ascend and descend. Stoppers can be freely attached to any of the front and rear frame members of the roller conveyer. Thus one article transferring device can be used not only as the front end part of a roller carrying out conveyer but also as the rear end part of a roller carrying in the conveyer by rotating the device as much as 180 degrees and changing the attaching position of the stopper.

The object of the invention is to provide an apparatus for transferring a container from a vehicle to a conveyor or from a conveyor to a vehicle in a simple and efficient way.

This object is achieved by the apparatus according to claim 1.

The apparatus provides the opportunity to transfer a container between a conveyor and a vehicle in transverse direction of the conveying direction of the conveyor, whereas the container is free of the conveyor supporting surface by lifting the container by the container lifting device when the container is displaced. In case of a dolly for transporting containers of an airplane the dolly can be driven to and parked at the loading station, the container can be unlocked with respect to the dolly if a locking system is present and the container lifting device can be moved to its upper position, after which the container can be displaced in a substantially horizontal direction from the dolly to the bearing surface of the container lifting device; then the container lifting device can be displaced to its lower position such that the container rests on the conveyor supporting surface. Subsequently, the container can be transported in the conveying direction on the conveyor, for example by manual pushing or driving a conveyor chain or belt. When a container should be transferred from the conveyor to the dolly at the unloading station the container can be lifted from the conveyor supporting surface by the container lifting device and can be displaced from the bearing surface thereof to the dolly in the displacement direction. In this case the dolly can be unlocked if a locking system is present and the bearing surface may be lifted substantially higher than a bottom surface of the dolly on which the container has to be placed.

An advantage of the apparatus according to the invention is that the container can be transferred in transverse direction of the conveying direction. For example, a series of dollys can be driven in the conveying direction and parked parallel to the conveyor and the containers can be successively transferred to the conveyor at the loading station. It is conceivable that the apparatus is provided with a plurality of loading and/or unloading stations along the conveyor.

In practice, the displacement direction is a transverse direction with respect to the conveying direction facing to the conveyor at the loading station and facing from the conveyor at the unloading station.

A container displacing member for displacing a container from a vehicle to the conveyor may be present at the loading station and/or for displacing a container from the conveyor to a vehicle is present at the unloading station, wherein the container displacing member is displaceable in the displacement direction. Applying a container displacing member reduces manual work for displacing a container between the conveyor and a vehicle.

In a preferred embodiment at least a part of the bearing surface is movable in substantially the displacement direction, since this further facilitates displacing a container in the displacement direction.

A further improvement is achieved when at least a part of the bearing surface is drivable in substantially the displacement direction, because this provides the opportunity to displace the container easily from the conveyor to the vehicle at the unloading station and from the vehicle to the conveyor at the loading station. The bearing surface may be formed by a conveyor belt or a chain or the like.

In a practical embodiment the conveyor comprises rollers which are rotatable about an axis of rotation extending transversely with respect to the conveying direction, and at least a part of the bearing surface is disposed between two adjacent rollers in the lower position of the container lifting device. The bearing surface may comprise a plurality of surfaces spaced from each other in the conveying direction. The rollers may be freely rotatable rollers on which a container rests in order to be displaced rather easily by manually pushing against it, for example, but drivable rollers are also conceivable.

For transferring a container from a vehicle to a conveyor the apparatus may be adapted such that under operating conditions the container is displaced in the displacement direction above a portion of the bearing surface when the container lifting device is in its lower position and then the container lifting device is displaced to its upper position until the bearing surface substantially touches a lower side of the container. The advantage of this embodiment is that the apparatus is independent from height variations of the bottom surface of a vehicle, for example due to wear of the tyres of the vehicle. The container lifting device can be controlled manually or automatically by a controller. In the latter case the container lifting device may be provided with a height level sensor. This may be adapted such that upon touching the lower side of the container the container lifting device is switched off. Once the container lifting device is in its upper position the container can be displaced further in the displacement direction to the conveyor, for example by driving the bearing surface in that direction.

The container lifting device may be controlled such that the container on the bearing surface is displaced in the displacement direction before the container lifting device is displaced to its lower position so as to place the container onto the conveyor supporting surface.

The apparatus may comprise an actuator for activating or deactivating a locking mechanism of a vehicle which locks or de-locks a container with respect to the vehicle. This is typically advantageous in case of dollys for transporting luggage container at airports, which dollys are provided with a locking mechanism for locking a bottom surface thereof with respect to the dolly. The actuator will be designed in dependence of the locking mechanism of the vehicle. In practice, the actuator may be formed by a pin or a tapered plate or the like, which is movable with respect to the conveyor in case the locking mechanism can be activated by inserting the pin into a corresponding hole of the vehicle. The pin may have a shape such that in case of moving the vehicle with respect to the conveyor the pin leaves the hole such that the locking mechanism automatically fixes the container with respect to the vehicle. This may be desired in terms of safety.

The container displacing member may comprise a frame, a first arm and a second arm, the first arm being pivotable with respect to the frame about a first pivoting axis and the second arm being pivotable with respect to the first arm about a second pivoting axis extending substantially parallel to the first pivoting axis at a vertical distance, wherein a pushing element is fixed to the second arm at a distance from the second pivoting axis, and wherein the displacing member is adapted such that the pushing element displaces substantially horizontally upon activating the displacing member. The advantage of this embodiment is that the container displacing member is relatively compact in horizontal direction when the angle between the first arm and the second arm is small.

For transferring a container from the conveyor to a vehicle the container displacing member comprises a pusher which is movable in the displacement direction beyond an end of the bearing surface as seen in the displacement direction and which is movable in vertical direction between a lower position in which it is disposed below the conveyor supporting surface and an upper position in which it is disposed above the bearing surface. In practice, at the unloading station the container may be lifted from the conveyor supporting surface by the container lifting device such that the container rests on the bearing surface, after which the container can be displaced in the displacement direction to the vehicle. At a certain moment the container may leave the bearing surface and be supported by the vehicle but still not being positioned entirely on the vehicle. Due to the presence of the pusher the container can be displaced to its final position on the vehicle since the pusher is movable in the displacement direction and above the bearing surface.

In a practical embodiment the pusher is engaged to the container lifting device such that the pusher and the container lifting device can move synchronously in vertical direction.

For transferring a container from the conveyor to a vehicle the apparatus may be provided with a positioning member for positioning a container on the conveyor at least in the conveying direction. This provides the opportunity to align the container to be displaced transversely from the conveyor to a vehicle with respect to the position of that vehicle along the conveyor.

The invention is also related to an apparatus for transferring a container from a vehicle to a conveyor or from a conveyor to a vehicle, comprising a conveyor for conveying a container, the conveyor having a conveying direction and being provided with a conveyor supporting surface for supporting a container thereon, a loading and/or unloading station where a container is displaceable to and/or or from the conveyor, respectively, in the conveying direction, a movable container transporting member for transporting a container between the loading and/or unloading station and a vehicle, the container transporting member being provided with a container lifting device having a bearing surface for bearing a container thereon, which container lifting device is movable in vertical direction with respect to the conveyor between a first position in which the bearing surface extends at a higher level than the conveyor supporting surface or at the same level thereof and a second position which is spaced from the first position. This apparatus provides the opportunity to move the container transporting member to the vehicle which supports a container, move the container lifting device in vertical direction to a desired level, e.g. the second position, at which the container can be displaced to the bearing surface of the container lifting device, move the container transporting member including the container to the loading station at the conveyor and move the container lifting device to its first position, in which the bearing surface is substantially at the same height level as the conveyor supporting surface, such that the container can be displaced substantially horizontally to the conveyor supporting surface.

The bearing surface may be movable to facilitate displacement of the container with respect to the container transporting member, and preferably the bearing surface is drivable in at least one direction within the plane through the bearing surface. In practice The bearing surface may be formed of rollers allowing a container to be transported in one direction perpendicularly to the axis of rotation of the rollers.

In a preferred embodiment the bearing surface can be revolved about a revolving axis extending upwardly. In case of a bearing surface which allows easy displacement of a container in one direction the bearing surface can be rotated such that this direction can be aligned with the conveying direction of the conveyor.

The invention will be explained in more detail hereinafter with reference to drawings, which are very schematic representations of embodiments of the invention.
Fig. 1 is a schematic plan view of an embodiment of the apparatus according to the invention.
Fig. 2 is a schematic plan view and a side view of an embodiment of the displacing member of the apparatus according to the invention.
Fig. 3 is a perspective view of a part of the apparatus indicated by III in Fig. 1.
Fig. 4 is a perspective view of a part of the apparatus indicated by IV in Fig. 1, but showing a slightly modified embodiment.
Fig. 5 is a schematic plan view of an alternative embodiment of the apparatus according to the invention, and a side view of a container transporting member.
Fig. 6 are sectional views of the apparatus as seen along the line VI-VI in Fig. 4, illustrating successive positions of a pusher.
Fig. 7 are plan views and a sectional view of a part of the apparatus indicated by VII in Fig. 1.

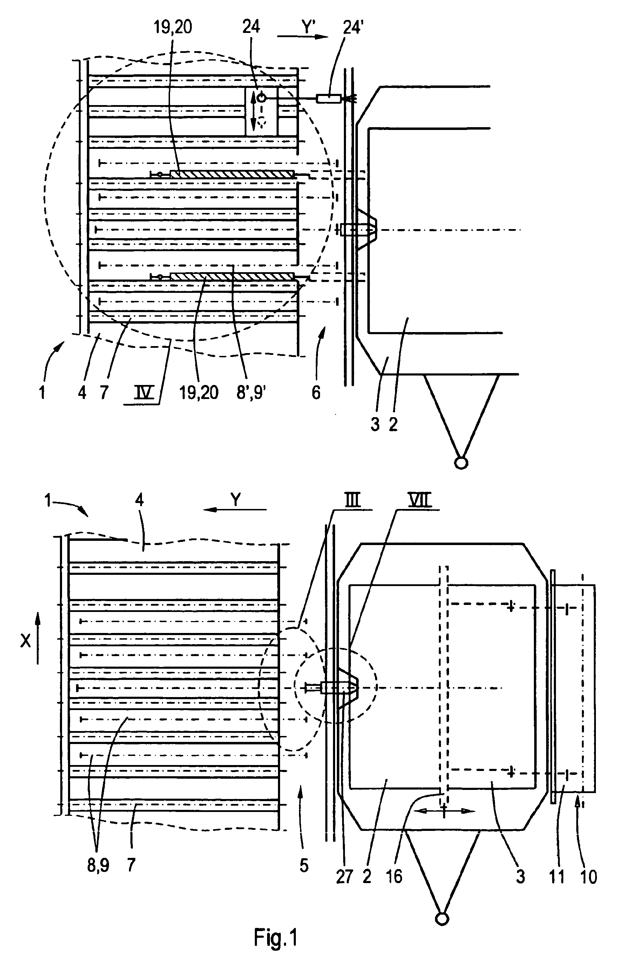

Fig. 1 shows an embodiment of an apparatus 1 which is suitable for transferring a container 2 from a vehicle or a dolly 3 to a conveyor 4 at a loading station 5 and for transferring a container 2 from the conveyor 4 to a dolly 3 at an unloading station 6. The conveyor 4 has a conveying direction X in which a container 3 can be transported to a next handling device (not shown), for example for emptying the content of the container 2. The conveyor 4 may be driven but it may also be provided with freely rotating wheels or rollers for easy manual displacement of a container 2 thereon. The conveyor 4 is provided with a conveyor supporting surface 7 for supporting a container 2 thereon. In the embodiment as shown in Fig. 1 the conveyor supporting surface 7 is formed by the upper surface of rollers which are rotatably about an axis of rotation extending substantially perpendicularly to the conveying direction X.

At the loading station 5 the container 2 is displaceable from the dolly 3 to the conveyor 4 in a displacement direction Y. In this embodiment the displacement direction Y at the loading station 5 extends perpendicularly to the conveying direction X.

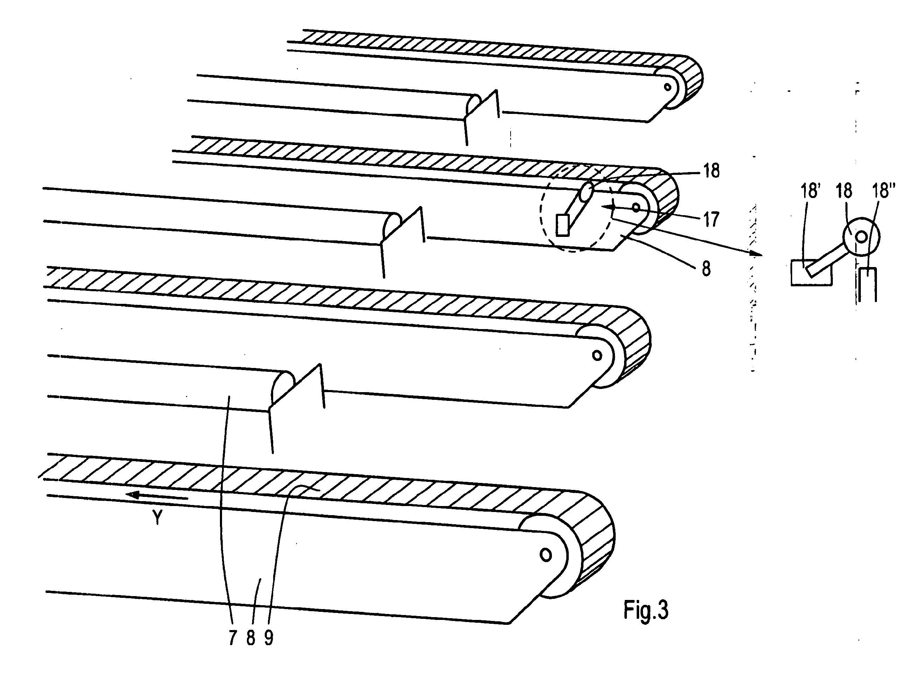

The apparatus 1 is provided with a container lifting device 8 at the loading station 5. The container lifting device 8 comprises a bearing surface 9 for bearing a container 2 thereon. The container lifting device 8 is movable in vertical direction with respect to the conveyor 4 between a lower position in which the bearing surface 9 extends below the conveyor supporting surface 7 or at the same level thereof, and an upper position in which the bearing surface 9 extends above the conveyor supporting surface 7. The bearing surface 9 is formed by an upper surface of chains disposed parallel with respect to each other. Each of the chains is located between two adjacent rollers of the conveyor 4. The width of the chains is smaller than the space between two adjacent rollers such that in the lower position of the container lifting device 8 the chains are located between two adjacent rollers. The chains are drivable in the displacement direction Y such that they can move a container 2 in that direction. Fig. 3 shows that the chains extend beyond the end of the conveyor supporting surface 7 as seen in opposite direction of the displacement direction Y. The container lifting device 8 according to Fig. 1 comprises five drivable parallel chains, but a larger or smaller number of chains is conceivable.

The embodiment of the apparatus 1 as shown in Fig. 1 also comprises a displacing member 10 at the loading station 5 for displacing a container 2 from a dolly 3 to the conveyor 4 in the displacement direction Y. In this embodiment the displacing member 10 is located at a distance from the conveyor 4 as seen in the displacement direction Y. This allows a dolly 3 including a container 2 to be driven parallel to the longitudinal axis of the conveyor 4 between the conveyor 4 and the displacing member 10.

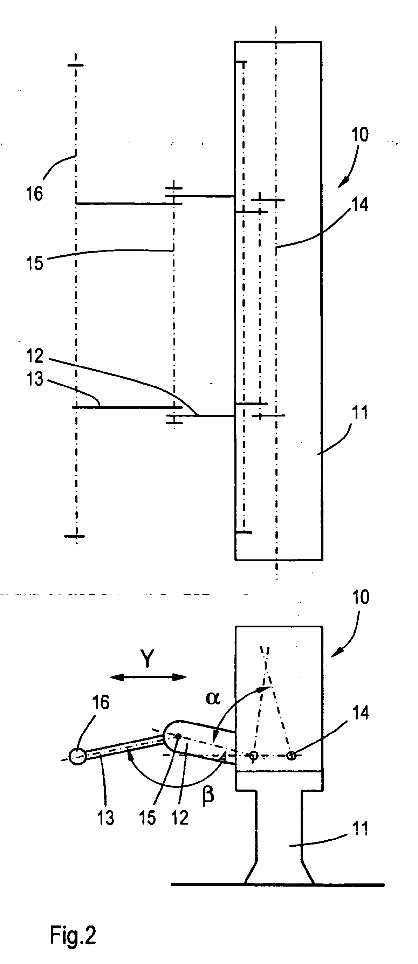

The displacing member 10 is shown in more detail in Fig. 2. The displacing member 10 comprises a frame 11, a first arm 12 and a second arm 13. The first arm 12 is pivotable with respect to the frame 11 about a first pivoting axis 14 and the second arm 13 is pivotable with respect to the first arm 12 about a second pivoting axis 15. The first and second pivoting axes extend substantially parallel to each other and are spaced with respect to each other in vertical direction. The displacing member 10 comprises a pushing element 16 which is fixed to the second arm 13 at a distance from the second pivoting axis 15. The displacing member 10 is adapted such that the pushing element 16 displaces substantially horizontally upon activating the displacing member 10. In a practical embodiment the displacing member 10 is configured such that the angle β as indicated in Fig. 2 is substantially twice the angle α when the pushing element 16 is at its furthest position with respect to the frame 11. Of course, alternative configurations of a displacing member 10 are conceivable.

It is noted that the displacing member is not necessarily integrated in the apparatus 1. It is possible to apply the displacing member 10 separately in a different apparatus.

Under operating conditions a dolly 3 including a container 2 thereon is driven to the loading station 5 and stopped between the conveyor 4 and the displacing member 10. If the dolly 3 is provided with a locking mechanism which locks or de-locks a movable bottom surface of the dolly 3 so as to fix the container 2 with respect to the dolly 3, an actuator 27 can be controlled for de-activating the locking mechanism. Then, the displacing member 10 is activated such that the pushing element 16 pushes the container 2 in the displacement direction Y to a position above a portion of the bearing surface 9 in which position the container 2 is still supported by the dolly 3, whereas the container lifting device 8 is still in its lower position.

Subsequently, the container lifting device 8 is displaced to its upper position until the bearing surface 9, or in this case the upper surface of the chains, touches a lower side of the container 2. The movement of the container lifting device 8 in upward direction is automatically stopped by means of a height level sensor 17, which is illustrated in Fig. 3. The height level sensor 17 comprises a touching element 18 which is hold up by a spring element 18'. The touching element 18 is rotatable and eccentrically coupled to the container lifting device 8. When the touching element 18 is moved downwards by the lower side of the container 2 due to lifting the container 2 by the container lifting device 8 it hits a contact sensor 18" after a certain displacement which results in a stop of the upward movement of the container lifting device 8. After that the chains of the container lifting device 8 are driven such that the bearing surface 9 and the container 2 are displaced in the displacement direction Y to the conveyor 4. At a predetermined location above the conveyor supporting surface 7 the chains are displaced downwardly so as to place the container 2 onto the rollers of the conveyor supporting surface 7.

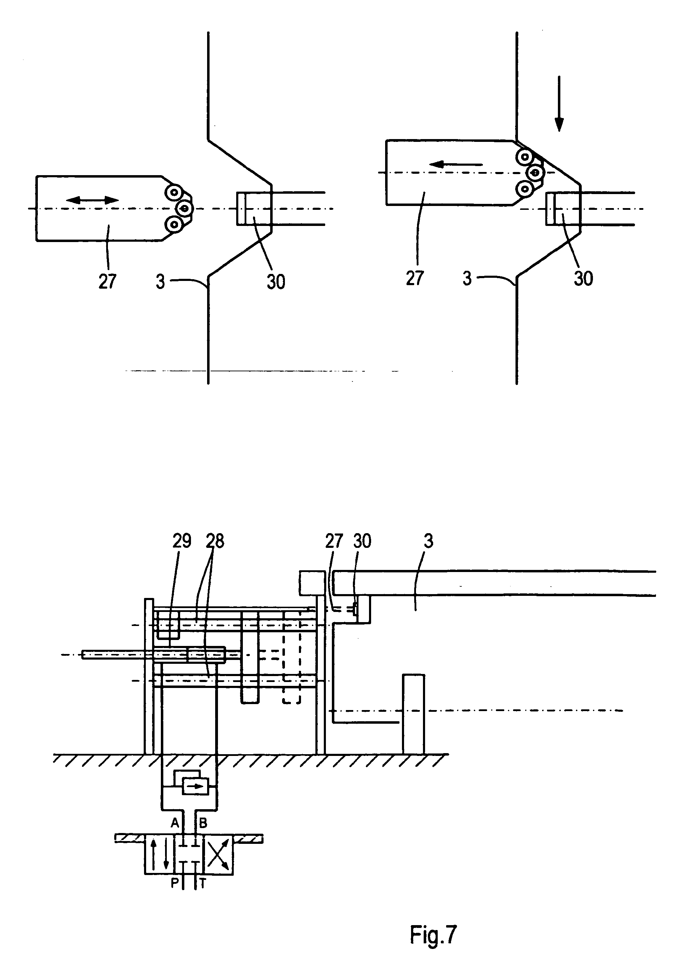

The actuator 27 for activating the locking mechanism of a dolly 3 is shown in more detail in Fig. 7. When the actuator 27, in this case a tapered plate, is pushed against a de-locking element 30, a container 2 on the dolly 3 will become freely movable with respect to the dolly 3. The actuator 27 is guidable along two guiding shafts 28 extending parallel to each other. The actuator 27 is driven by a hydraulic piston 29 which is controlled such that upon exerting a back force on the actuator 27 above a predetermined level the piston 29 is forced in backward direction. This provides the opportunity to push the actuator 27 away from the dolly 3 in case the dolly is driven away unintentionally. In addition to the shapes of the actuator 27 and the corresponding hole in the dolly 3, this movement may be further facilitated by applying rollers on the actuator 27 as shown in Fig. 7. When the actuator 27 is pushed away due to a displacement of the dolly 3 the locking mechanism of the dolly 3 will be locked automatically and a container 2 on the dolly 3 will be hold automatically. This is illustrated in the plan views of the actuator 27 in Fig. 7.

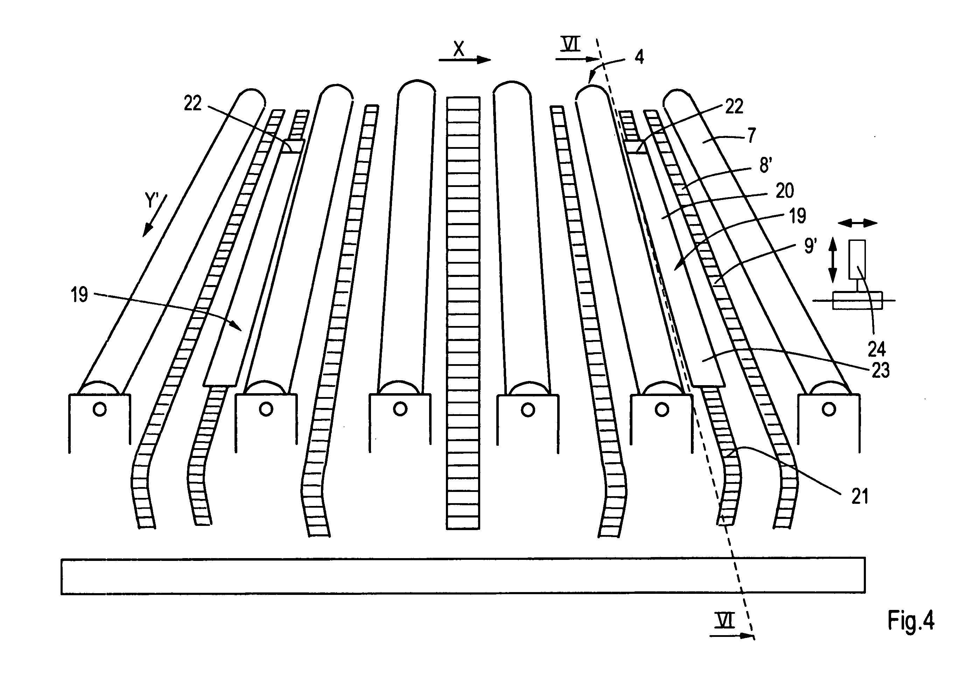

The unloading-station 6 looks like similar to the loading station 5. At the unloading station 6 the container 2 is displaceable from the conveyor 4 to the dolly 3 in the displacement direction which is indicated by Y' in Fig. 1 and 4 which is opposite to the displacement direction Y. For example, an empty container 2 coming from an unloading apparatus (not shown) may be transported by the conveyor 4 to the unloading station 6 and transferred to the dolly 3.

At the unloading station 6 the apparatus 1 is also provided with a container lifting device 8' including a bearing surface 9' for bearing a container 2 thereon. The container lifting device 8' is movable in vertical direction with respect to the conveyor 4 between a lower position in which the bearing surface 9' extends below the conveyor supporting surface 7 or at the same level thereof, and an upper position in which the bearing surface 9' extends above the conveyor supporting surface 7. In the embodiment as shown in Fig. 1 the bearing surface 9' is also formed by an upper surface of chains disposed parallel with respect to each other and each of the chains is located between two adjacent rollers of the conveyor 4.

In this case the container 2 which is resting on the conveyor supporting surface 7 at the unloading station 6 can be transferred to the dolly 3 by first lifting the container 2 by the container lifting device 8' from the conveyor supporting surface 7, then displacing the container 2 in the displacement direction Y' to the dolly 3 by driving the chains. The bearing surface 9' will be lifted to a height level such that it is equal to the bottom level of the dolly 3 on which the container 2 has to be placed, or slightly higher than that. At a certain moment the container 2 will leave the bearing surface 9' and be supported by the dolly 3. However, since the chains are not allowed to touch the dolly 3 it may be desired to push the container 2 further in the displacement direction Y' than is possible by means of the chains. For that reason the apparatus 1 is provided with pushers 19 which make it possible to push the container 2 to its final position on the dolly 3.

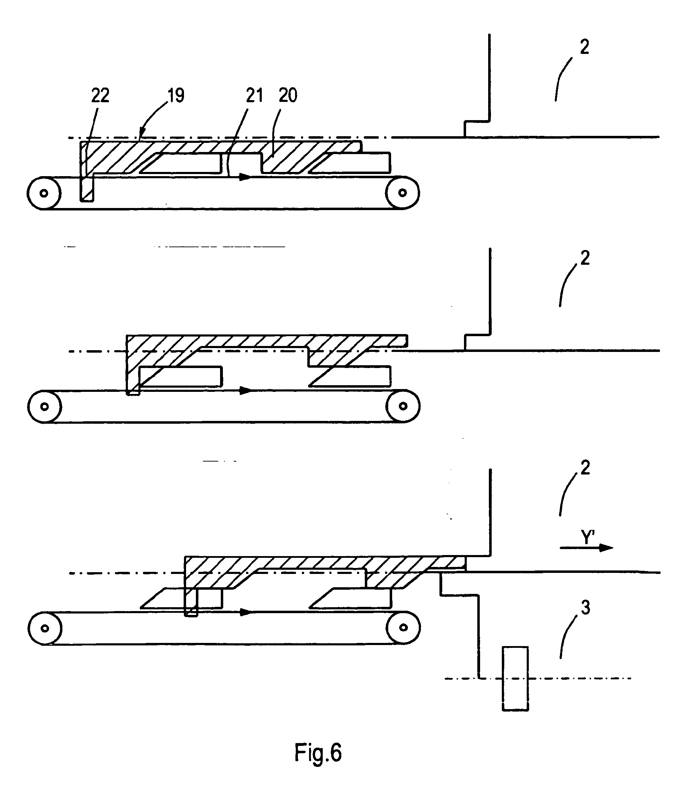

In the embodiment of Fig. 4 (which is slightly different from the embodiment of Fig. 1) there are two pushers 19, which are movable in the displacement direction Y' beyond an end of the bearing surface 9' as seen in the displacement direction Y'. Each pusher 19 comprises a plate 20 which is fixed to a chain 21 at a fixing location 22 which is spaced from an end portion 23 of the plate 20 as seen in opposite direction of the displacement direction Y', whereas the end portion 23 is free from the chain 21. When the chain 21 is moved in the displacement direction Y' the end portion 23 passes the end of the bearing surface 9' as seen in the displacement direction Y'. The pusher 19 is also movable in vertical direction because it is fixed to the container lifting device 8' in this embodiment. At a lower position it is disposed below the conveyor supporting surface 7 and at an upper position it is disposed at least above the conveyor supporting surface 7 and preferably above the bearing surface 9' so as to be able to push against a bottom portion of the container 2. In the embodiment as shown in Fig. 4 the pusher 19 is automatically moved upwardly upon moving it in the displacement direction Y', see Fig. 6. This is achieved by guides which direct the pusher 19 upwardly in the displacement direction Y'. It can be seen in Fig. 6 that the pusher 19 touches a bottom portion of the container 2 upon movement in the displacement direction Y' and subsequently pushes the container 2 further on the dolly 3.

Furthermore, Figs. 1 and 4 show a positioning member 24 for positioning a container 2 on the conveyor supporting surface 7 at the unloading station 6. The positioning member 24 is provided for correctly aligning the container 2 on the conveyor 4 with respect to the dolly 3 on which it must be placed. Under operating conditions a movable sensor 24' detects the position of an empty dolly 3 with respect to the conveyor 4 at the unloading station 6. Upon the signal from the sensor 24' the positioning member 24 is moved upwardly above the conveyor supporting surface 7 and in the conveying direction X such that an approaching container 2 on the conveyor 4 is stopped at a position which corresponds to the position of the dolly 3 next to the conveyor 4.

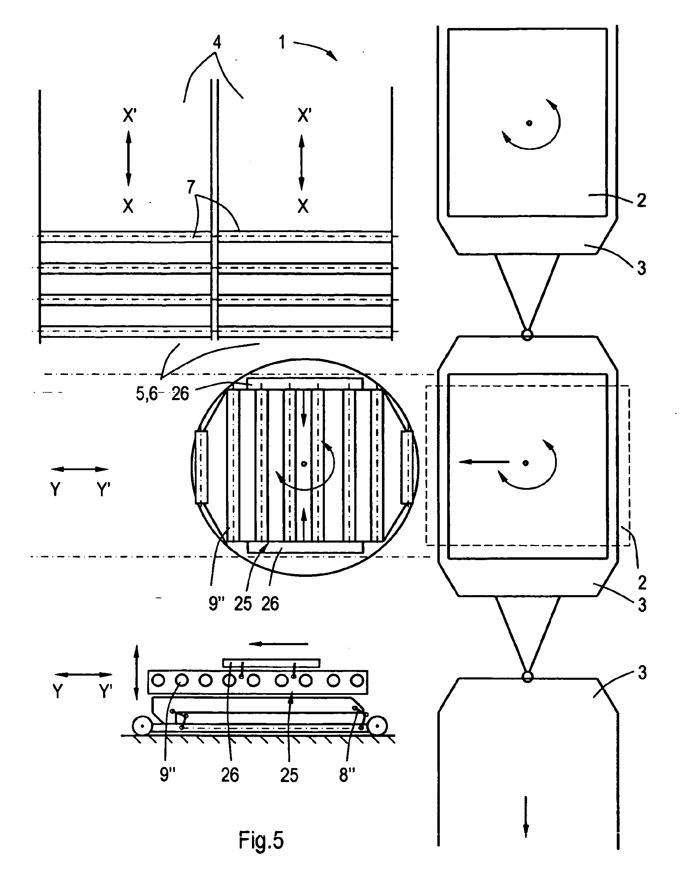

Fig. 5 shows an alternative embodiment of an apparatus 1 for transferring a container 2 from a dolly 3 to a conveyor 4 or from a conveyor 4 to a dolly 3. In the embodiment as shown the apparatus 1 has two conveyors 4 and each of the conveyors 4 has a conveying direction X or X'. The apparatus 1 is provided with a drivable container transporting member 25 for transporting a container 2 between the loading station 5 or the unloading station 6 and the dolly 3 in the displacement direction Y or Y'. In this case the displacement directions Y, Y' extend perpendicularly to the conveying directions X, X', but alternative mutual angles are conceivable, as well.

The container transporting member 25 is provided with a container lifting device 8" having a bearing surface 9" for bearing a container 2 thereon. The container lifting device 8" is movable in vertical direction with respect to the conveyor 4 between a first position and a second position. In the first position the bearing surface 9" extends above the conveyor supporting surface 7 or at the same level thereof. The bearing surface 9" is formed by rollers which are freely movable, or drivable in at least one direction. The second position is spaced from the first position and may be lower or higher than the first position, depending on the height of the bottom of a dolly 3 on which a container 2 is placed.

In the condition as shown in Fig. 5 the container 2 is rotated 90° on the dolly 2 and then pushed in the displacement direction Y onto the bearing surface 9'', which is set at a height level matching with a bottom of the dolly 3. It is noted that in practice the dolly 3 may be provided with a bottom for supporting a container 2 which can be revolved about an axis extending upwardly. Subsequently, the container transporting member 25 is moved in the displacement direction Y to the loading station 5. The bearing surface 9'' can be revolved about a revolving axis extending upwardly. In the embodiment as shown in Fig. 5 the bearing surface 9" is rotated 90 ° at the loading station 5 as indicated by an arrow. After rotation the direction in which the container is displaceable on the container transporting member 25 substantially coincides with the conveying direction X, X'. Then the container 2 can be displaced from the container transporting member 25 to the conveyor 4 in the conveying direction X. If desired the bearing surface 9'' can be moved upwardly or downwardly in order to match the height levels of the conveyor supporting surface 7 and the bearing surface 9'' of the container transporting member 25.

Furthermore, the container transporting member 25 is provided with centring members 26 for centring the container 2 on the bearing surface 9". The centring members 26 may also hold a container 2 on the container transporting member 25 during transport.

When a container 2 has to be transferred from the conveyor 2 to a dolly 3 in the embodiment according to Fig. 5 the order of container handling occurs in opposite sequence.

From the foregoing, it will be clear that the invention provides an apparatus for transferring a container from a vehicle to a conveyor or from a conveyor to a vehicle in a simple and efficient way.

The invention is not limited to the embodiments shown in the figures, which can be varied in several ways within the scope of the invention as claimed. It is for example possible that the containers may have alternative shapes, for example palletized articles.

## Claims

1. An apparatus (1) for transferring a container (2) from a conveyor (4) to a vehicle (3), comprising
a conveyor (4) for conveying a container (2), the conveyor (4) having a conveying direction (X) and being provided with a conveyor supporting surface (7) for supporting a container (2) thereon,
an unloading station (6) where a container (2) is displaceable from the conveyor (4) in a displacement direction (Y') extending transversely with respect to the conveying direction (X),
a container lifting device (8') located at the unloading station (6) having a bearing surface (9') for bearing a container (2) thereon, which container lifting device (8') is movable in vertical direction with respect to the conveyor (4) between a lower position in which the bearing surface (9') extends below the conveyor supporting surface (7) or at the same level thereof, and an upper position in which the bearing surface (9') extends above the conveyor supporting surface (7), wherein a container displacing member (10) for displaying a container (2) from the conveyor (4) to a vehicle (3) is present at the unloading station (6), the container displacing member (10) being displaceable in the displacement direction (Y'),
**characterised in that** the container displacing member comprises a pusher (19) which is movable in the displacement direction (Y') beyond an end of the bearing surface (9') as seen in the displacement direction (Y') and which is movable in vertical direction between a lower position which it is disposed below the conveyor supporting surface (7) and an up-per position in which it is disposed above the bearing surface (9').

2. An apparatus (1) according to claim 1, wherein the pusher (19) is engaged to the container lifting device (8') such that the pusher (19) and the container lifting device (8') can move synchronously in vertical direction.

3. An apparatus (1) according to claim 1 or 2, wherein at least a part of the bearing surface (9') is movable in substantially the displacement direction (Y').

4. An apparatus (1) according to claim 3, wherein at least a part of the bearing surface (9') is drivable in substantially the displacement direction (Y').

5. An apparatus (1) according to one of the preceding claims, wherein the conveyor (4) comprises rollers which are rotatable about an axis of rotation extending transversely with respect to the conveying direction (X), and wherein at least a part of the bearing surface (9') is disposed between two adjacent rollers in the lower position of the container lifting device (8').

6. An apparatus (1) according to claim 5, wherein the rollers are freely rotatable rollers or drivable rollers.

7. An apparatus (1) according to one of the preceding claims, wherein the bearing surface (9') comprises a plurality of surfaces spaced from each other in the conveying direction (X).

8. An apparatus (1) according to on of the preceding claims, wherein the bearing surface (9') is formed by upper surfaces of conveyor belts or chains, which are preferably disposed parallel to each other.

9. An apparatus (1) according to one of the preceding claim, wherein the pusher (19) comprises a place (20), which is fixed to a chain (21), at a fixing location (22) which is spaced from an end portion (23) of the plate (20) as seen in opposite direction of the displacement direction (Y'), whereas the end portion (23) is free from the chain (21).

10. An apparatus (1) according to one of the preceding claims, wherein the apparatus is provided with a guide for directing the pusher (19) upwardly in the displacement direction (Y').

## Patentansprüche

1. Vorrichtung (1) zum Umsetzen eines Behälters (2) von einem Förderer (4) auf ein Fahrzeug (3), die aufweist:
einen Förderer (4) zum Fördern eines Behälters (2), wobei der Förderer (4) eine Förderrichtung (X) hat und mit einer Fördererstützfläche (7) zum Abstützen eines Behälters (2) darauf versehen ist,
einer Entladestation (6), an der ein Behälter (2) vom Förderer (4) in einer Verschieberichtung (Y') verschiebbar ist, die sich im Hinblick auf die Förderrichtung (X) quer erstreckt,
einem an der Entladestation (6) liegenden Behälterhubwerk (8') mit einer Tragfläche (9') zum Tragen eines Behälters (2) darauf, wobei das Behälterhubwerk (8') im Hinblick auf den Förderer (4) in senkrechter Richtung zwischen einer unteren Position, in der sich die Tragfläche (9') unter der Fördererstützfläche (7) oder auf gleicher Höhe damit erstreckt, und einer oberen Position beweglich ist, in der sich die Tragfläche (9') über der Fördererstützfläche (7) erstreckt, wobei ein Behälterverschiebeteil (10) zum Verschieben eines Behälters (2) vom Förderer (4) auf ein Fahrzeug (3) an der Entladestation (6) vorhanden ist, wobei das Behälterverschiebeteil (10) in Verschieberichtung (Y') verschiebbar ist,
**dadurch gekennzeichnet, dass** das Behälterverschiebeteil einen Schieber (19) aufweist, der in Verschieberichtung (Y') über ein Ende der Tragfläche (9') im Blick in Verschieberichtung (Y') hinaus beweglich ist und der in senkrechter Richtung zwischen einer unteren Position, in der er unter der Fördererstützfläche (7) angeordnet ist, und einer oberen Position beweglich ist, in der er über der Tragfläche (9') angeordnet ist.

2. Vorrichtung (1) nach Anspruch 1, wobei der Schieber (19) mit dem Behälterhubwerk (8') so im Eingriff steht, dass sich der Schieber (19) und das Behälterhubwerk (8') in senkrechter Richtung synchron bewegen können.

3. Vorrichtung (1) nach Anspruch 1 oder 2, wobei mindestens ein Teil der Tragfläche (9') im Wesentlichen in Verschieberichtung (Y') beweglich ist.

4. Vorrichtung (1) nach Anspruch 3, wobei mindestens ein Teil der Tragfläche (9') im Wesentlichen in Verschieberichtung (Y') antriebsfähig ist.

5. Vorrichtung (1) nach einem der vorstehenden Ansprüche, wobei der Förderer (4) Rollen aufweist, die um eine Drehachse drehbar sind, die sich im Hinblick auf die Förderrichtung (X) quer erstreckt, und wobei mindestens ein Teil der Tragfläche (9') zwischen zwei benachbarten Rollen in der unteren Position des Behälterhubwerks (8') angeordnet ist.

6. Vorrichtung (1) nach Anspruch 5, wobei die Rollen frei drehbare Rollen oder antriebsfähige Rollen sind.

7. Vorrichtung (1) nach einem der vorstehenden Ansprüche, wobei die Tragfläche (9') mehrere Oberflächen aufweist, die in Förderrichtung (X) voneinander beabstandet sind.

8. Vorrichtung (1) nach einem der vorstehenden Ansprüche, wobei die Tragfläche (9') durch Oberseiten von Förderbändern oder -ketten gebildet ist, die vorzugsweise parallel zueinander angeordnet sind.

9. Vorrichtung (1) nach einem der vorstehenden Ansprüche, wobei der Schieber (19) eine Platte (20) aufweist, die an einer Kette (21) an einer Befestigungsstelle (22) befestigt ist, die von einem Endabschnitt (23) der Platte (20) im Blick in Gegenrichtung zur Verschieberichtung (Y') beabstandet ist, wogegen der Endabschnitt (23) frei von der Kette (21) ist.

10. Vorrichtung (1) nach einem der vorstehenden Ansprüche, wobei die Vorrichtung mit einer Führung zum Leiten des Schiebers (19) nach oben in Verschieberichtung (Y') versehen ist.

## Revendications

1. Appareil (1) pour transférer un contenant (2) d'un transporteur (4) à un véhicule (3), comprenant :
un transporteur (4) pour transporter un contenant (2), le transporteur (4) possédant une direction de transport (X) et pourvu d'une surface de support de transporteur (7) pour supporter un contenant (2) sur celle-ci,
un poste de déchargement (6) où un contenant (2) est déplaçable à partir du transporteur (4) dans une direction de déplacement (Y') s'étendant transversalement par rapport à la direction de transport (X),
un dispositif de levage de contenant (8') situé au poste de déchargement (6) possédant une surface d'appui (9') pour porter un contenant (2) sur celle-ci, lequel dispositif de levage de contenant (8') est mobile dans une direction verticale par rapport au transporteur (4) entre une position inférieure, dans laquelle la surface d'appui (9') s'étend en dessous de la surface de support de transporteur (7) ou au même niveau que celle-ci, et une position supérieure, dans laquelle la surface d'appui (9') s'étend au-dessus de la surface de support de transporteur (7), dans lequel un élément de déplacement de contenant (10) pour déplacer un contenant (2) du transporteur (4) à un véhicule (3) est présent au poste de déchargement (6), l'élément de déplacement de contenant (10) étant déplaçable dans la direction de déplacement (Y'),
**caractérisé en ce que** l'élément de déplacement de contenant comprend un poussoir (19) qui est mobile dans la direction de déplacement (Y') au-delà d'une extrémité de la surface d'appui (9'), telle qu'elle est vue dans la direction de déplacement (Y'), et qui est mobile dans la direction verticale entre une position inférieure, dans laquelle il est disposé en dessous de la surface de support de transporteur (7), et une position supérieure, dans laquelle il est disposé au-dessus de la surface d'appui (9').

2. Appareil (1) selon la revendication 1, dans lequel le poussoir (19) est en prise avec le dispositif de levage de contenant (8') de sorte que le poussoir (19) et le dispositif de levage de contenant (8') puissent se déplacer de façon synchrone dans la direction verticale.

3. Appareil (1) selon la revendication 1 ou 2, dans lequel au moins une partie ou la surface d'appui (9') est mobile sensiblement dans la direction de déplacement (Y').

4. Appareil (1) selon la revendication 3, dans lequel au moins une partie de la surface d'appui (9') est entraînable sensiblement dans la direction de déplacement (Y').

5. Appareil (1) selon une des revendications précédentes, dans lequel le transporteur (4) comprend des rouleaux qui sont rotatifs autour d'un axe de rotation s'étendant transversalement par rapport à la direction de transport (X), et dans lequel au moins une partie de la surface d'appui (9') est disposée entre deux rouleaux adjacents dans la position inférieure du dispositif de levage de contenant (8').

6. Appareil (1) selon la revendication 5, dans lequel les rouleaux sont des rouleaux librement rotatifs ou des rouleaux entraînables.

7. Appareil (1) selon une des revendications précédentes, dans lequel la surface d'appui (9') comprend une pluralité de surfaces espacées les unes des autres dans la direction de transport (X).

8. Appareil (1) selon une des revendications précédentes, dans lequel la surface d'appui (9') est formée par des surfaces supérieures de courroies ou chaînes de transporteur, qui sont de préférence disposées parallèlement les unes aux autres.

9. Appareil (1) selon une des revendications précédentes, dans lequel le poussoir (19) comprend une plaque (20), qui est fixée à une chaîne (21), dans un emplacement de fixation (22) qui est espacé d'une partie d'extrémité (23) de la plaque (20), telle qu'elle est vue dans une direction opposée à la direction de déplacement (Y'), alors que la partie d'extrémité (23) est libre par rapport à la chaîne (21).

10. Appareil (1) selon une des revendications précédentes, dans lequel l'appareil est pourvu d'un guidage pour diriger le poussoir (19) vers le haut dans la direction de déplacement (Y').
